(19) Europäisches Patentamt
European Patent Office
Office européen des brevets

(11) **EP 4 734 522 A1**

(12) **EUROPEAN PATENT APPLICATION**

(43) Date of publication:
**29.04.2026 Bulletin 2026/18**

(21) Application number: **24306789.9**

(22) Date of filing: **23.10.2024**

(51) International Patent Classification (IPC):
*H04N 19/85* (2014.01)    *H04N 19/70* (2014.01)
*H04N 19/117* (2014.01)

(52) Cooperative Patent Classification (CPC):
**H04N 19/117; H04N 19/156; H04N 19/70; H04N 19/85**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **DEMARTY, Claire-Helene 35520 MONTREUIL LE GAST (FR)**

• **BLONDE, Laurent 35235 THORIGNE-FOUILLARD (FR)**
• **AUMONT, Franck 35770 VERN SUR SEICHE (FR)**
• **LE MEUR, Olivier 35160 TALENSAC (FR)**
• **REINHARD, Erik 35630 HEDE-BAZOUGES (FR)**

(74) Representative: **Vossius & Partner Patentanwälte Rechtsanwälte mbB Siebertstraße 3 81675 München (DE)**

(54) **ENERGY SAVING MODE IN ENCODER OPTIMIZATION INFORMATION SUPPLEMENTAL ENHANCEMENT INFORMATION**

(57) Systems, methods, and instrumentalities for an energy saving mode indicator. An example device may receive a bitstream that includes encoded video data and metadata that indicates an energy saving indication. The device may determine, based on the energy saving indication, whether the encoded video data has been preprocessed for energy savings. The device may process the encoded video data based on the determining.

FIG. 6

EP 4 734 522 A1

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for an energy saving mode in encoder optimization information metadata (e.g., encoder optimization information) supplemental enhancement information (SEI). An example device may receive a bitstream that includes encoded video data and an encoder optimization information (EOI) metadata that indicates an energy saving indication. The device may determine, based on the energy saving indication, whether the encoded video data has been pre-processed for energy savings. The device may process the encoded video data based on the determining.

The device may determine, based on the energy saving indication, to apply post-processing filtering. The device may determine, based on the energy saving indication, a post-processing filter. The device may apply the post-processing filter to the video data.

The device may determine, based on the energy saving indication, to apply post-processing filtering. The device may perform post-processing filtering to the video data.

Based on determining that the encoded video data has been pre-processed for energy savings, the device may identify a pre-processing filter associated with the video data based on the energy saving indication. The device may determine whether a post-processing filter corresponds to the identified pre-processing filter associated with the video data. Based on determining that the post-processing filter does not correspond to the pre-processing filter, the device may apply the post-processing filter to the video data. Based on determining that pre-processing filter corresponds to the post-processing filter, the device may bypass applying the post-processing filter to the video data.

The device may determine that an energy saving condition has been satisfied. Based on the energy saving condition being satisfied, the device may parse the energy saving indication. Whether the encoded video data has been pre-processed for energy savings may be determined based on the parsed energy saving indication.

Determining that the energy saving condition has been satisfied may include determining that the video decoding device is in an energy saving mode. Determining that the energy saving condition has been satisfied may include determining that the video decoding device is associated with a low energy user profile. Determining that the energy saving condition has been satisfied may include determining that a battery level of the video decoding device is below a threshold.

The device may determine that an amount of energy associated with using (e.g., displaying) the video data is above a threshold. Based on the determination that the amount of energy associated with using (e.g., displaying) the video data is above the threshold, the device may apply a post-processing filter to the video data.

An example video encoding device may encode video data. The device may determine metadata that indicates an energy saving indication associated with the video data. The device may generate a bitstream comprising the encoded video data and the metadata.

The metadata may be carried in at least one of an encoder optimization information (EOI) supplemental enhancement information (SEI) message or an encoder energy optimization information (EEOI) SEI message.

The device may determine to apply pre-processing filtering. The device may determine a pre-processing filter. The device may apply the pre-processing filter to the video data, wherein the energy saving indication indicates the pre-processing filter.

The device may pre-process the video data for energy savings. The energy saving indication may indicate that the video data was pre-processed for energy savings.

The device may determine to apply pre-processing filtering. The device may apply pre-processing filtering to the video data. The device may include, in the metadata, an energy module indication configured to indicate a location in a video workflow in which energy savings is expected based on the pre-processing filtering.

The metadata may indicate whether previously received energy optimization information is canceled for the subsequent video data. The metadata may indicate whether energy optimization information in the metadata applies to the subsequent video data. The metadata may indicate an optimization type applied to the subsequent video data.

The bitstream may be a first bitstream. The encoded video data may be first encoded video data. The device may receive a second bitstream that includes second encoded video data and an encoder energy optimization information (EEOI) metadata that indicates at least one of: whether previously received energy optimization information is canceled for the second encoded video data; whether energy optimization information in the EEOI metadata applies to subsequent video data; or an optimization type applied to the second encoded video data. The device may decode the second encoded video data based on the EEOI metadata.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows an example of process for encoding a bitstream comprising information indicative of energy savings optimization of the video according to embodiments.
FIG. 5 shows another example of process for encoding a bitstream comprising information indicative of energy savings optimization of the video according to embodiments.
FIG. 6 shows an example of process for decoding a bitstream comprising information indicative of energy savings optimization of the video according to embodiments.
FIG. 7 shows another example of process for decoding a bitstream comprising information indicative of energy savings optimization of the video according to embodiments.

## DETAILED DESCRIPTION

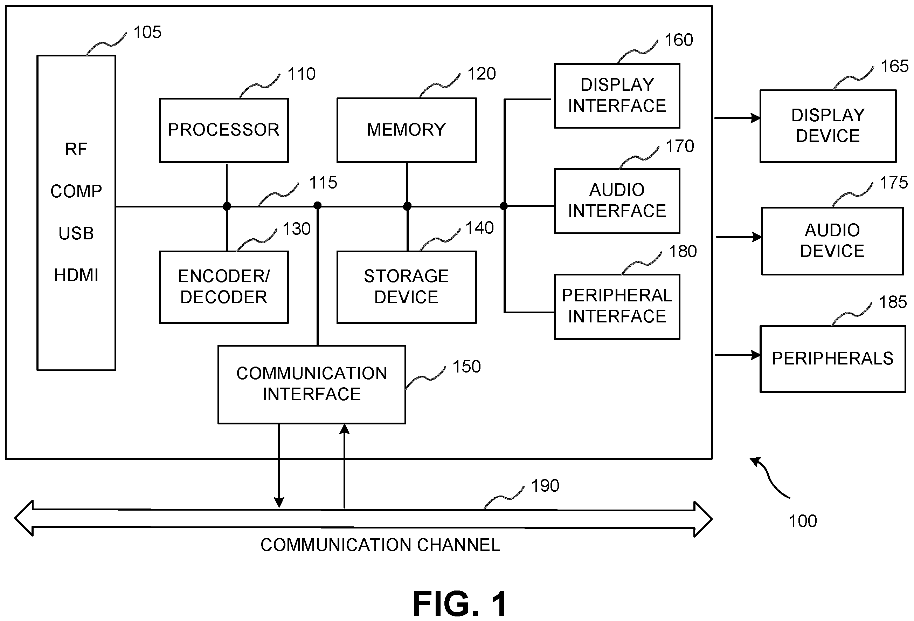

In describing the various embodiments of the present disclosure, certain terminology is used herein for convenience only and should not be considered as limiting such embodiments. In the drawings, the same reference numerals are employed for designating the same elements throughout the several figures and the present description.
Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.
One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.
The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.
The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.
The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.
Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., over-the-top (OTT) services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

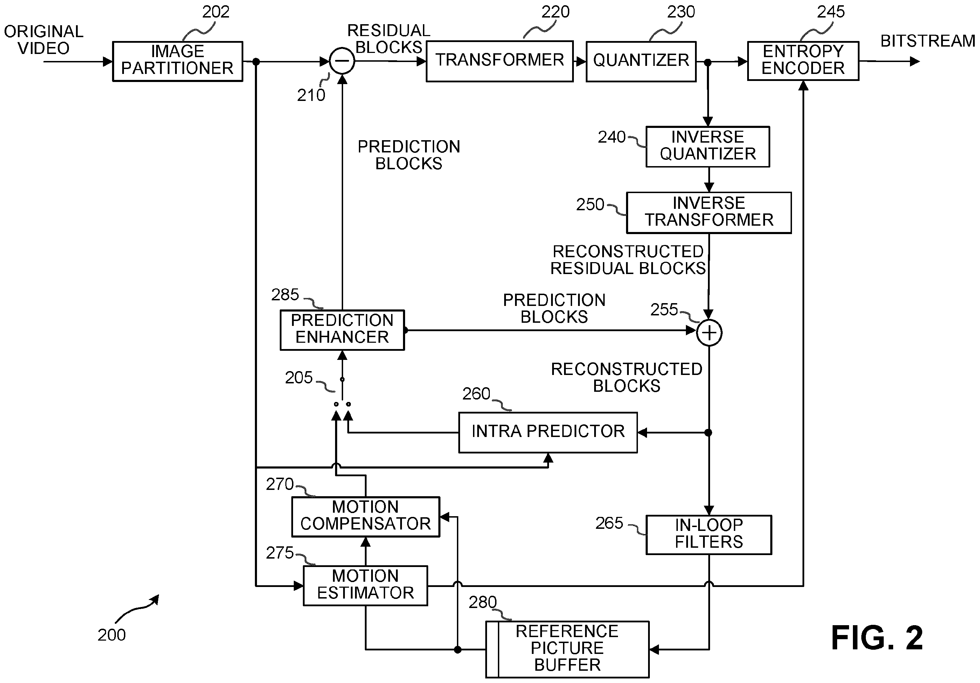

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

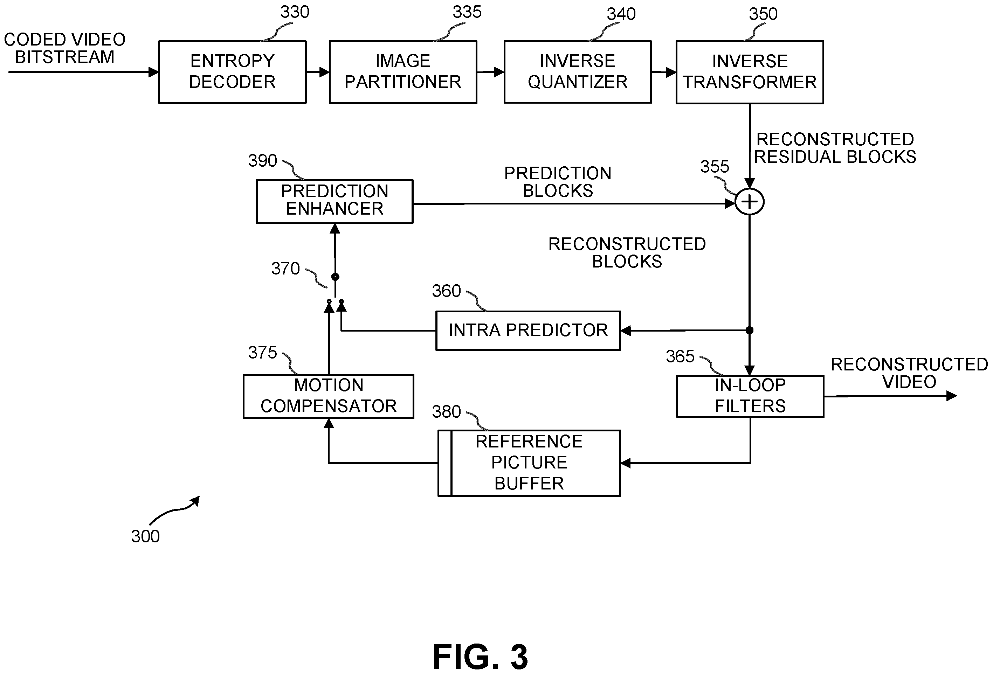

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, *Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Feature(s) described herein relate to optimization of a video for energy savings through encoding and associated pre-processing filters (e.g., in the context of video compression).

Example inputs are provided herein.

In video compression, energy saving profiles may be applied at the encoder and associated pre-processing filters.

An encoder optimization information (EOI) metadata (e.g., in the shape of supplemental enhancement information (SEI) message) may carry information indicating whether the video has been optimized for human viewing or machine analysis. The EOI metadata (e.g., in the shape of an EOI SEI message) may include the types of optimization that have been applied in pre-processing and/or encoding.

Metadata in the EOI metadata (e.g., in the shape of an EOI SEI message) may indicate an energy saving mode. An encoder energy optimization information (EOI) message may indicate whether a video has been optimized for energy savings purposes.

Feature(s) associated with energy reduction are provided herein. Feature(s) associated with SEI signaling are provided herein. Feature(s) associated with encoding optimization information are provided herein. Feature(s) associated with encoding optimization information SEI are provided herein. Feature(s) associated with energy consumption are provided herein.

The message (e.g., an SEI message or an EOI SEI message) may indicate the type of pre-processing filters that were applied to the video.

The message (e.g., or another message, another SEI message, or another EOI SEI message) may not indicate whether the video has been optimized for an energy saving mode (e.g., through the applied pre-processing).

If insufficient energy is available at the decoder and the video has been optimized to save energy, the video may be used (e.g., as is). If the video has not been optimized to save energy, to the decoder may apply post-processing to save energy or decide not to use (e.g., display) the video.

The decoder may determine to apply post-processing based on pre- or post-processing applied at the encoder side.

The message (e.g., the EOI SEI message) specification may include energy saving information.

The message (e.g., the EOI SEI message) may indicate whether the video has been optimized for human viewing or machine analysis. The message (e.g., EOI SEI) message may indicate the type(s) of optimization that have been applied in pre-processing and/or encoding.

Information included in the (e.g., SEI) message may indicate the type(s) of pre-processing that was applied to the video.

The message (e.g., EOI SEI message) may indicate whether the message (e.g., EOI SEI message) is suitable for energy savings modes or profiles.

Metadata may be used to indicate that the message (e.g., EOI SEI message) is suitable for energy savings modes or profiles.

An encoder energy optimization information (EOI) SEI message may indicate whether a video has been optimized for energy savings purposes. Energy information may be added in the EOI SEI message.

Example syntax is provided herein.

The EOI SEI message syntax may be modified as follows:

Table 1. Example EOI SEI message syntax

| encoder_optimization_info(payloadSize) { | Descriptor |
|---|---|
| **eoi_cancel_flag** | u(1) |
| if( !eoi_cancel_flag ) { | |
| **eoi_persistence flag** | u(1) |
| **eoi_for_human_viewing_idc** | u(2) |
| **eoi_for_machine_analysis_idc** | u(2) |
| **eoi_for_energy_saving_idc** | u(2) |
| **eoi_type** | u(16) |
| if (eoi for energy_saving idc > 1) | |
| **eoi energy_module idc_** | u(4) |
| if( EoiObjectBasedFlag ) | |
| **eoi_object_based_idc** | ue(v) |

(continued)

| | |
|---|---|
| if( EoiTemporalResamplingFlag ) { | |
| **eoi_temporal_resampling_type_flag** | u(1) |
| **eoi_num_int_pics** | ue(v) |
| } | |
| if( EoiSpatialResamplingFlag ) { | |
| **eoi_orig_pic_dimensions_flag** | u(1) |
| if( eoi_orig_pic_dimensions_flag ) { | |
| **eoi_orig_pic_width** | u(16) |
| **eoi_orig_pic_height** | u(16) |
| } else | |
| **eoi_spatial_resampling_type_flag** | u(1) |
| } | |
| if( EoiPrivacyProtectionFlag ) { | |
| **eoi_privacy_protection_method_idc** | u(4) |
| **eoi_privacy_info_type** | u(8) |
| } | |
| } | |
| } | |

The following semantics may be used.

The encoder optimization information SEI message may be used to indicate whether the video has been optimized for human viewing or machine analysis. The EOI SEI message may indicate the type(s) of optimization that have been applied in pre-processing or encoding. The EOI SEI message may indicate whether the video has been optimized for the purpose of energy savings.

eoi_for_energy_saving_idc equal to 3 may indicate that purposes for the applied optimization include energy saving purposes. eoi_for_energy_saving_idc equal to 2 may indicate that the video is suitable but not specifically optimized for energy saving purposes. eoi_for_energy_saving_idc equal to 1 may indicate that the video is unsuitable for energy saving purposes. eoi_for_energy_saving_idc equal to 0 may indicate that it is unknown if the video is suitable for energy saving purposes.

Bitstream conformance may specify (e.g., require) that the value of eoi_for_human_viewing_idc and eoi_for_machine_analysis_idc cannot both equal 1.

eoi energy_module idc may be a bitfield indication of location(s) in the video workflow energy savings may be expected, as shown in Table 2.

Table 2. Example definitions of eoi energy_module idc

| bitMask | Interpretation |
|---|---|
| 0x01 | Energy saving can be expected during transmission |
| 0x02 | Energy savings can be expected at the decoder |
| 0x04 | Energy savings can be expected while applying the post-processing at the decoder side |
| 0x08 | Energy savings can be expected at the display side |

**eoi_type** may indicate the types of optimization method (e.g., as specified in Table 3). If ( eoi_type & bitMask ) is not equal to 0, it may indicate that the optimization type with the bitMask value in Table 3 has been applied. If eoi_type is greater than 0 and ( eoi_type & bitMask) is equal to 0, it may indicate that the optimization type with the bitMask value has not been applied. If eoi_type is equal to 0, it may indicate that optimization as determined by the application has been used.

If eoi_type is greater than 0 and (eoi_type & 0x08) is greater than 0, it may indicate that brightness adaptation has been applied to the video (e.g., the pictures for which this SEI message persists may have been pre-processed or encoded to adapt their brightness by decreasing or increasing its level, for example, to reduce the amount of energy consumption at the display).

Table 3. Example definitions of eoi_type

| bitMask | Interpretation |
|---|---|
| 0x01 | Object-based optimization; the pictures for which this SEI message persists have been pre-processed or encoded so that detected objects in the pictures are optimized with respect to other parts of the pictures for the indicated optimization purposes |
| 0x02 | Temporal resampling optimization |
| 0x04 | Spatial resampling optimization |
| 0x08 | Temporal quality optimization in a manner that quality fluctuates temporally |
| 0x10 | Spatial quality optimization; the pictures for which this SEI message persists have been pre-processed or encoded to reduce unnecessary information or improve the quality of necessary information.(e.g to reduce the amount of noise and remove speckles at the picture-level) |
| 0x20 | Privacy protection optimization; the pictures for which this SEI message persists have been pre-processed or encoded to protect personal information. (e.g. removal or replacing of personal identifiable information, pseudonymization, anonymization) |
| 0x40 | Brightness adaptation; the pictures for which this SEI message persists have been pre-processed or encoded to adapt their brightness by decreasing or increasing its level (e.g. to reduce the amount of energy consumption at the display) |

eoi_object_based_idc (e.g., if present) may indicate the type of object-based optimization (e.g., as specified in Table 4). If ( eoi_object_based_idc & bitMask) is not equal to 0, this may indicate that the object-based optimization type associated with the bitMask value in Table 4 has been applied. If eoi_object_based_idc is greater than 0 and ( eoi_object_based_idc & bitMask) is equal to 0, this may indicate that the object-based optimization type associated with the bitMask value has not been applied. If eoi_object_based_idc is equal to 0, this may indicate that an application-defined type of object-based optimization has been applied. The value of eoi_object_based_idc may be in the range of 0 to 15 (e.g., inclusive), for example, in bitstreams conforming to a specification. Values of 16 to 65,535 (e.g., inclusive) for eoi object_based idc may be reserved for future use (e.g., and may not be present in bitstreams conforming to the specification). If the value of eoi_object_based_idc is in the range of 16 to 65,535 (e.g., inclusive), decoders conforming to the specification may ignore eoi object_based idc.

If eoi_object_based_idc is greater than 0 and (eoi_object_based_idc & 0x08) is greater than 0, it may indicate that areas outside the detected objects may have been processed by an energy-aware method (e.g. brightness adaptation, for example, to reduce the amount of energy consumption at the display) prior to encoding.

Metadata (e.g., additional metadata) may indicate brightness information on the level (e.g., value of the brightness increase or decrease on the areas outside the detected objects, or the value of the brightness increase or decrease globally on the image).

Table 4. Example definitions of eoi_object_based_idc

| bitMask | Interpretation |
|---|---|
| 0x01 | Areas outside the detected objects have been blurred prior to encoding. |
| 0x02 | Areas outside the detected objects have been encoded with coarser transform-domain quantization than the quantization used for the detected objects. |
| 0x04 | Areas outside the detected objects have been overwritten. For example, an encoding system can overwrite areas outside the detected objects with a constant sample value. |
| 0x08 | Areas outside the detected objects have been processed by an energy-aware method prior to encoding. |

An encoder energy optimization information message (e.g., in the shape of an SEI message) may be used.

A message (e.g., in the shape of an SEI message) referred to as an encoder energy optimization information (EEOI) message (e.g., an EEOI SEI message) may indicate whether a video was optimized for energy savings purposes. Example syntax and semantics are described herein.

The EEOI SEI message may be dedicated to energy savings purposes. Optimization methods related to privacy may not be used (e.g., needed).

Table 5. Example EEOI message syntax

| encoder_energy_optimization_info(payloadSize ) { | Descriptor |
|---|---|
| **eeoi_cancel_flag** | u(1) |
| if( !eeoi_cancel_flag ) { | |
| **eeoi_persistence_flag** | u(1) |
| **eoi_for_energy_savings_idc** | u(2) |
| **eoi_type** | u(16) |
| if( EeoiObjectBasedFlag ) | |
| **eeoi_object_based_idc** | ue(v) |
| if( EeoiTemporalResamplingFlag ) { | |
| **eeoi_temporal_resampling_type_flag** | u(1) |
| **eeoi_num_int_pics** | ue(v) |
| } | |
| if( EeoiSpatialResamplingFlag ) { | |
| **eeoi_orig_pic_dimensions_flag** | u(1) |
| if( eeoi_orig_pic_dimensions_flag ) { | |
| **eeoi_orig_pic_width** | u(16) |
| **eeoi_orig_pic_height** | u(16) |
| } else | |
| **eeoi_spatial_resampling_type_flag** | u(1) |
| } | |
| } | |
| } | |

The EEOI SEI message may be used to indicate whether the video has been optimized for energy savings. The EEOI SEI message may indicate the type(s) of optimization that have been applied in pre-processing or encoding.

eeoi_cancel_flag equal to 1 may indicate that the persistence of the encoder energy optimization information SEI message included in a (e.g., any) previous PU in output order is canceled. eeoi_cancel_flag equal to 0 may indicate that information on energy optimization that has been applied in pre-processing or encoding follows.

eeoi_persistence_flag may indicate the persistence of the optimization information provided in this SEI message. eeoi_persistence_flag equal to 0 may indicate that the optimization information applies for the current picture (e.g., only the current picture). eeoi_persistence_flag equal to 1 may indicate that the optimization information applies for the current picture and (e.g., all) subsequent pictures of the current layer in output order. eeoi_persistence_flag equal to 1 may indicate that the optimization information applies for the current picture and (e.g., all) subsequent pictures of the current layer in output order until one or more of the following conditions are true: a new coded layer video sequence (CLVS) of the current layer begins; the bitstream ends, or a picture in the current layer associated with an encoder energy optimization information SEI message is output that follows the current picture in output order.

eeoi_for_energy_saving_idc equal to 3 may indicate that purposes for the applied optimization include energy saving purposes. eoi_for_energy_saving_idc equal to 2 may indicate that the video is suitable, but not specifically optimized, for energy saving purposes. eoi_for_energy_saving_idc equal to 1 may indicate that the video is unsuitable for energy saving purposes. eoi_for_energy_saving_idc equal to 0 may indicate that it is unknown if the video is suitable for energy saving purposes.

eeoi energy_module idc may be a bitfield indication of where in the video workflow energy savings may be expected, as shown in Table 6.

Table 6. Example definitions of eeoi energy_module idc

| bitMask | Interpretation |
|---------|----------------|
| 0x01 | Energy saving can be expected during transmission |
| 0x02 | Energy savings can be expected at the decoder |
| 0x04 | Energy savings can be expected while applying the post-processing at the decoder side |
| 0x08 | Energy savings can be expected at the display side |

eeoi_type may indicate the type(s) of optimization method (e.g., as specified in Table 7). For example, ( eeoi_type & bitMask ) not equal to 0 may indicate that the optimization type with the bitMask value in Table 7 has been applied. eeoi_type greater than 0 and ( eeoi_type & bitMask) equal to 0 may indicate that the optimization type with the bitMask value has not been applied. eeoi_type equal to 0 may indicate that optimization as determined by the application has been used.

If eeoi_type is greater than 0 and (eeoi_type & 0x04) is greater than 0, it may indicate that brightness adaptation has been applied to the video. For example, the pictures for which this SEI message persists may have been pre-processed or encoded to adapt their brightness by decreasing or increasing its level (e.g., to reduce the amount of energy consumption at the display).

Table 7. Example definitions of eeoi_type

| bitMask | Interpretation |
|---------|----------------|
| 0x01 | Object-based optimization; the pictures for which this SEI message persists have been pre-processed or encoded so that detected objects in the pictures are optimized with respect to other parts of the pictures for the indicated optimization purposes |
| 0x02 | Temporal resampling optimization |
| 0x04 | Spatial resampling optimization |
| 0x08 | Temporal quality optimization in a manner that quality fluctuates temporally |
| 0x10 | Spatial quality optimization; the pictures for which this SEI message persists have been pre-processed or encoded to reduce unnecessary information or improve the quality of necessary information (e.g., to reduce the brightness of unnecessary information at the picture level) |
| 0x20 | Brightness adaptation; the pictures for which this SEI message persists have been pre-processed or encoded to adapt their brightness by decreasing or increasing its level (e.g. to reduce the amount of energy consumption at the display) |

The variables EeoiObjectBasedFlag, EeoiTemporalResamplingFlag, EeoiSpatialResamplingFlag, EeoiTemporalQualityFlag and EeoiSpatialQualityFlag, may indicate whether eeoi_type indicates the type of the optimization to include object-based optimization, temporal resampling optimization, spatial resampling optimization, temporal quality optimization, and spatial quality optimization, respectively. These variables may be derived as follows:

$$EeoiObjectBasedFlag = (\,(\,eeoi\_type\ \&\ 0x01\,)\ >\ 0\,)\ ?\ 1:0$$

$$EeoiTemporalResamplingFlag = (\,(\,eeoi\_type\ \&\ 0x02\,)\ >\ 0\,)\ ?\ 1:0$$

$$EeoiSpatialResamplingFlag = (\,(\,eeoi\_type\ \&\ 0x04\,)\ >\ 0\,)\ ?\ 1:0$$

$$EeoiTemporalQualityFlag = (\,(\,eeoi\_type\ \&\ 0x08\,)\ >\ 0\,)\ ?\ 1:0$$

$$EeoiSpatialQualityFlag = (\,(\,eeoi\_type\ \&\ 0x10\,)\ >\ 0\,)\ ?\ 1:0$$

If eeoi_persistence_flag is equal to 0, EeoiTemporalResamplingFlag and EeoiTemporalQualityFlag may be equal to 0 (e.g., for bitstream conformance).

eeoi_object_based_idc (e.g., if present) may indicate the type of object-based optimization (e.g., as specified in Table 8). ( eeoi_object_based_idc & bitMask ) not equal to 0 may indicate that the object-based optimization type associated with the bitMask value in Table 8 has been applied. eeoi_object_based_idc greater than 0 and ( eeoi_object_based_idc & bitMask ) equal to 0 may indicate that the object-based optimization type associated with the bitMask value has not been applied. eeoi_object_based_idc equal to 0 may indicate that an application-defined type of object-based optimization has been applied. The value of eeoi_object_based_idc may be in the range of 0 to 15 (e.g., inclusive), for example, in bitstreams conforming to a specification. Values of 16 to 65,535 (e.g., inclusive) for eeoi_object_based_idc may be reserved for future use and may not be present in bitstreams conforming to the specification. If the value of eeoi_object_based_idc is in the range of 16 to 65,535 (e.g., inclusive), decoders conforming to the specification may ignore eeoi_object_based_idc.

If eeoi_object_based_idc is greater than 0 and (eeoi_object_based_idc & 0x08) is greater than 0, it may indicate that areas outside the detected objects may have been processed by an energy-aware method (e.g., brightness adaptation, for example, to reduce the amount of energy consumption at the display) prior to encoding.

Metadata (e.g., additional metadata) may indicate brightness information on the level (e.g., value of the brightness increase or decrease on the areas outside the detected objects, or the value of the brightness increase or decrease globally on the image).

Table 8. Example definitions of eeoi_object_based_idc eeoi_temporal_resampling_type_flag equal to 0 may indicate that the temporal resampling optimization is a subsampling operation. eeoi_temporal_resampling_type_flag equal to 1 may indicate that the temporal resampling optimization is an up-sampling operation.

| bitMask | Interpretation |
|---|---|
| 0x01 | Areas outside the detected objects have been blurred prior to encoding. |
| 0x02 | Areas outside the detected objects have been encoded with coarser transform-domain quantization than the quantization used for the detected objects. |
| 0x04 | Areas outside the detected objects have been overwritten. For example, an encoding system can overwrite areas outside the detected objects with a constant sample value. |
| 0x08 | Areas outside the detected objects have been processed by an energy-aware method prior to encoding. |

eeoi_num_int_pics greater than 0 may indicate that the count of pictures that the encoding system excluded between pairs (e.g., each pair) of coded pictures in output order (e.g., if eeoi_temporal_resampling_type_flag is equal to 0) or added between pairs (e.g., each pair) of source pictures for encoding (when eeoi_temporal_resampling_type_flag is equal to 1) within the persistence of this SEI message is constant. If eeoi_temporal_resampling_type_flag is equal to 0 and eeoi_num_int_pics is greater than 0, eeoi_num_int_pics may indicate the count of pictures that the encoding system excluded between each pair of coded pictures in output order. If eeoi_temporal_resampling_type_flag is equal to 1 and eeoi_num_int_pics is greater than 0, eeoi_num_int_pics may indicate the count of pictures that the encoding system added between each pair of source pictures for encoding.

eeoi_num_int_pics equal to 0 may indicate that the count of pictures that the encoding system excluded between pairs (e.g., each pair) of coded pictures in output order (when eeoi_temporal_resampling_type_flag is equal to 0) or added between pairs (e.g., each pair) of source pictures for encoding (when eeoi_temporal_resampling_type_flag is equal to 1) within the persistence of this SEI message is unknown or varying.

The value of eeoi_num_int_pics may be in the range of 0 to 63 (e.g., inclusive).

eeoi_orig_pic_dimensions_flag equal to 1 may indicate that the eeoi_orig_pic_width and eeoi_orig_pic_height syntax elements are present. eeoi_orig_pic_dimensions_flag equal to 0 may indicate that the eeoi_orig_pic_width and eeoi_orig_pic_height are not present.

eeoi_orig_pic_width and eeoi_orig_pic_height (e.g., if present) may indicate the width and height, respectively, of the original source picture in units of luma samples.

eeoi_spatial_resampling_type_flag equal to 0 may indicate that the spatial resampling optimization is a subsampling operation. eeoi_spatial_resampling_type_flag equal to 1 may indicate that the spatial resampling optimization is an up-sampling operation.

Example encoder implementations are provided herein.

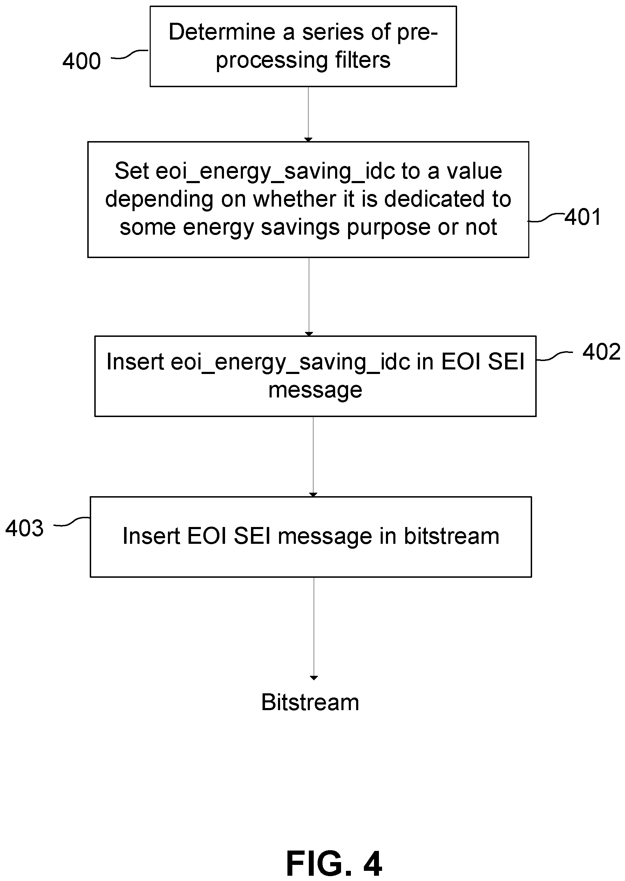

An example implementation at the encoder is provided in FIG. 4. At the encoder side, a series of pre-processing filters may be defined for energy savings purposes and/or machine analysis or human viewing purposes. A series of pre-processing filters may be defined for machine analysis, human viewing purposes, and/or energy savings purposes. At 400, the encoder may determine a series of pre-processing filters. The information may indicate whether the video was optimized (e.g., using pre-processing) for energy saving purposes. For example, at 401, the encoder may set the value of eoi_energy_saving_idc based on whether the eoi_energy_saving_idc is dedicated to power savings. The information may indicate the extent to which the video was optimized for energy saving purposes. The encoder may set a series of parameters and related metadata that further indicate the series of pre-processing. The encoder may indicate the module(s) on which the energy savings will be applied. For example, the encoder may set the value of eoi energy_module idc to indicate the module(s) on which the energy savings will be applied. At 402, the encoder may insert the information (e.g., eoi_energy_saving_idc and/or eoi energy_module idc) into the message in the shape of e.g., an EOI SEI message. At 403, the message (e.g., in the shape of an EOI SEI message) may be inserted in the bitstream.

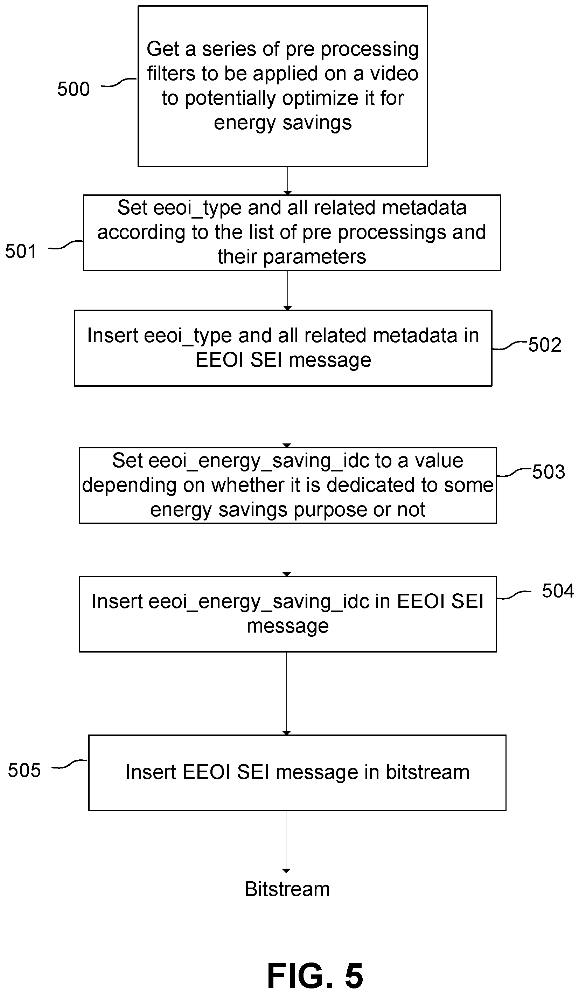

FIG. 5 illustrates an example implementation at the encoder side. At 500, a series of pre-processing filters may be chosen to optimize the video for energy savings purposes. At 501, the encoder may determine a value of the parameter eeoi_type (e.g., to define the series of processing) and a series of related metadata for the processing parameters. The encoder may indicate the modules on which the energy savings will be applied. For example, the encoder may indicate that optimized pre-processing was applied to optimize energy savings at the decoder side or the display side. For example, the encoder may set the value of eeoi_energy_module_idc to indicate the module(s) on which the energy savings will be applied. At 502, the information may be inserted in the message (e.g., in the shape of an EEOI SEI message). At 503, the encoder may set eeoi_energy_saving_idc to a value based on whether the video was optimized for energy savings purposes and to which extent. At 504, eeoi_energy_saving_idc may be inserted into the message (e.g., in the shape of an EEOI SEI message). eeoi_energy_module_idc may be inserted into the EEOI message. At 505, the message (e.g., in the shape of an EEOI SEI message) may be inserted in the bitstream.

Example decoder implementations are provided herein.

The implementations at the decoder described herein may be adapted for the case in which a dedicated encoder energy optimization message is created and used. For example, the same actions and workflow apply, with the change of the EOI message in the shape of e.g., an EOI SEI message into the EEOI message in the shape of e.g., an EEOI SEI.

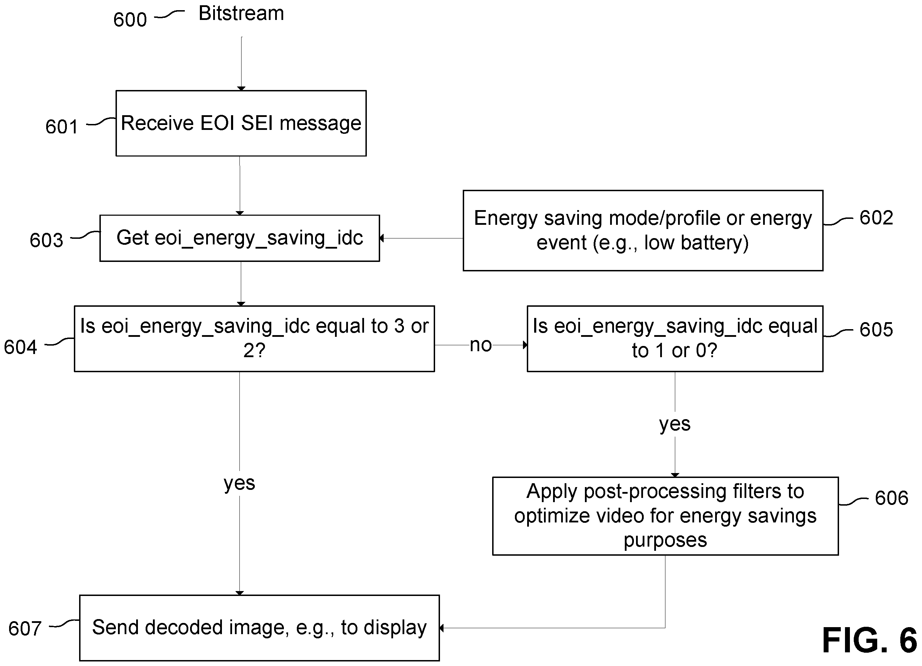

An example decoder-side implementation is illustrated in FIG. 6. At 600, the decoder may receive the bitstream. The decoder may receive the message (e.g., an in the shape of EOI SEI message) at 601. At 602, if the decoder is in an energy saving mode, has a low energy user profile, or an energy event is detected (e.g., the device battery is low), the eoi_energy_saving_idc may be retrieved at 603. At 604, if the value of eoi_energy_saving_idc is equal to 2 or 3, the decoder may send (e.g., directly send) the decoded picture for use (e.g., for display) (e.g., without modification) at 607. If, at 605, the decoder determines that the value of eoi_energy_saving_idc is equal to 1 or 0, post-processing filter(s) for energy saving may be applied at 606. At 605, the decoder may check if the value of eoi_energy_saving_idc is equal to 1. The decoder may determine whether launching post-processing functions is possible (e.g., given the current energy constraints). If post-processing is possible, the decoder may send the post-processed decoded picture to the output (e.g., the display).

At 604, the decoder may determine to use (e.g., display) (e.g., directly display) the decoded picture/video (e.g., if eoi_energy_saving is equal to 3).

At 604, the decoder may determine to send the decoded picture/video to the display if the value of eoi_energy_saving is equal to 3, 2, or 0.

The decoder may perform one or more actions (e.g., after the actions at 604 and before the actions at 607). For example, the actions may make displaying or using the decoded image conditional (e.g., on the amount of energy needed for such usage). If the amount of energy that will be used to display the image is too high, the picture may perform the actions at 605 (e.g., sent directly to 605). This may reduce energy consumption (e.g., by applying additional post-processing). The decoder may determine to apply further post-processing to reduce the energy consumption (e.g., while checking the amount of energy needed after 604). The decoder may determine to apply further post-processing to reduce the energy consumption (e.g., without checking the amount of energy needed after 604).

The decoder may determine to check the type(s) of post-processing against the type(s) of pre-processing that were applied at the encoder (e.g., as indicated in the EOI message, for example, in the shape of an EOI SEI message).

At step 604, if an indication of the optimized modules is present in the message (e.g., in the form of the eoi energy_module idc), the decoder may further check if these modules correspond to modules present in the video chain (e.g., eoi energy_module idc may indicate that the video was optimized to save energy at the display, but the video may be used only for a workflow in which no display exists). If the indicated optimized modules do not correspond to modules present in the workflow or if one or more modules are missing, the decoder may decide that the energy savings applied are not sufficient. In this case, the decoder may decide to apply additional post processing for energy savings.

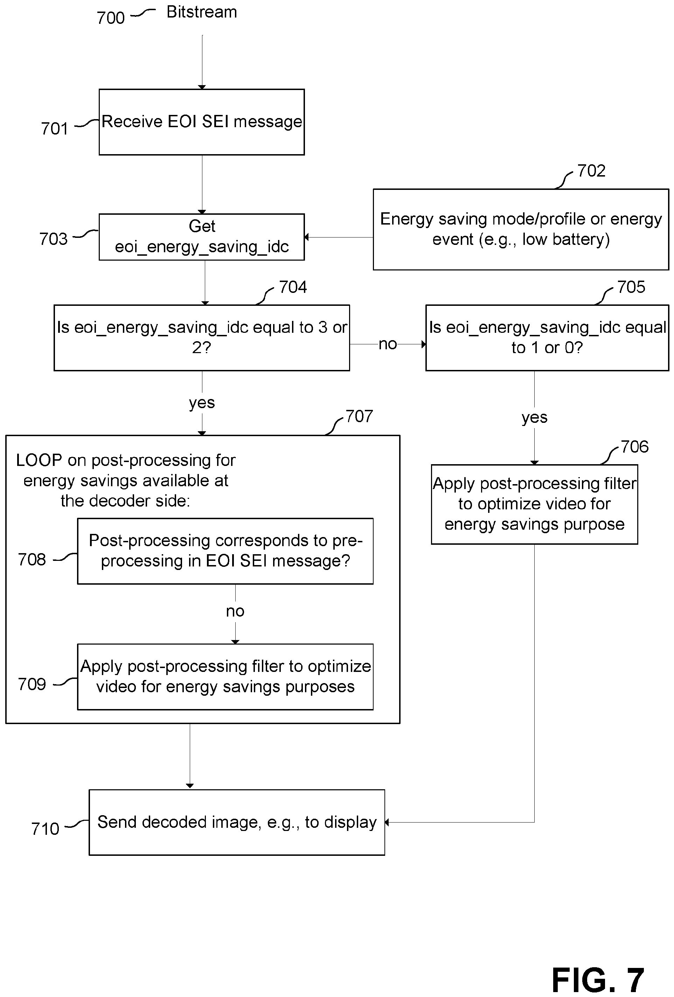

FIG. 7 illustrates an example decoder-side implementation. The implementation in FIG. 7 may involve the decoder performing actions 700-706 that are similar to or the same as actions 600-606 in FIG. 6. At 704, if eoi_energy_saving_idc is equal to 3 or 2, the decoder may send the video to a post-processing loop, at 707. The post-processing loop may include a series of post-processing filters (e.g., potentially different post-processing filters). At 708, the decoder may determine which post-processing actions correspond to pre-processing indicated in the EOI message. At 709, the decoder may apply post-processing filter(s) (e.g., post-processing filter(s) that are different from the pre-processing filters in the EOI message) to optimize the video for energy saving purposes. For example, the decoder may choose post-processing filter(s) that will optimize modules in the workflow and that were not indicated in the eoi energy_module idc metadata. The decoder may send the decoded image/video to an output (e.g., a display) at 710.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

> i. Encoding, into coded video data, syntax elements that can enable the decoder to decode the coded video data, according to any of the embodiments described herein.

> ii. Video data (e.g., a bitstream) that may include one or more of the described syntax elements, or variations thereof, whether transmitted, stored, or otherwise made available.

> iii. Creating, transmitting, receiving, and/or decoding of the bitstream.

> iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. HTTP live Streaming (HLS) manifest transmitted over HTTP.

iii. DASH MPD descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for dequantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A video decoding device comprising:
   a processor configured to:

   receive encoded video data and metadata that indicates an energy saving indication;
   determine, based on the energy saving indication, whether the encoded video data has been pre-processed for energy savings; and
   process the encoded video data based on the determining.

2. The video decoding device of claim 1, wherein the metadata is carried in at least one of an encoder optimization information (EOI) supplemental enhancement information (SEI) message or an encoder energy optimization information (EEOI) SEI message.

3. The video decoding device of claim 1 or 2, wherein the processor is further configured to:

   determine, based on the energy saving indication, to apply post-processing filtering;
   determine, based on the energy saving indication, a post-processing filter; and
   apply the post-processing filter to the video data.

4. The video decoding device of any one of claims 1 to 3, wherein the processor is further configured to:

   based on determining that the encoded video data has been pre-processed for energy savings, identify a pre-processing filter associated with the video data based on the energy saving indication;
   determine whether a post-processing filter corresponds to the identified pre-processing filter associated with the video data; and
   based on determining that the post-processing filter does not correspond to the pre-processing filter, apply the post-processing filter to the video data.

5. The video decoding device of any one of claims 1 to 4, wherein the processor is further configured to:

   determine that an energy saving condition has been satisfied; and
   based on the energy saving condition being satisfied, parse the energy saving indication, wherein whether the encoded video data has been pre-processed for energy savings is determined based on the parsed energy saving indication.

6. The video decoding device of claim 5, wherein the processor being configured to determine that the energy saving condition has been satisfied comprises the processor being configured to determine that:

   the video decoding device is in an energy saving mode;
   the video decoding device is associated with a low energy user profile; or
   a battery level of the video decoding device is below a threshold.

7. The video decoding device of any one of claims 1 to 6, wherein the processor is further configured to:

   determine that an amount of energy associated with displaying the video data is above a threshold; and
   based on the determination that the amount of energy associated with displaying the video data is above the threshold, apply a post-processing filter to the video data.

8. The video decoding device any one of claims 1 to 7, wherein processor is further configured to:

   based on determining that the encoded video data has been pre-processed for energy savings, parse an energy module indication configured to indicate a location in a video workflow in which energy savings is expected; and
   determine, based on the energy module indication, to apply post-processing filtering; and
   apply post-processing filtering to the video data.

9. The video decoding device any one of claims 1 to 8, wherein the metadata further indicates at least one of:

   whether previously received energy optimization information is canceled for subsequent video data;
   whether energy optimization information in the metadata applies to the subsequent video data; or
   an optimization type applied to the subsequent video data.

10. A video encoding device comprising:
    a processor configured to:

    encode video data;
    determine metadata that indicates an energy saving indication associated with the video data; and
    generate a bitstream comprising the encoded video data and the metadata.

11. The video encoding device of claim 10, wherein the metadata is carried in at least one of an encoder optimization information (EOI) supplemental enhancement information (SEI) message or an encoder energy optimization information (EEOI) SEI message.

12. The video encoding device of claim 10 or 11, wherein the processor is further configured to:

   determine to apply pre-processing filtering;
   determine a pre-processing filter; and
   apply the pre-processing filter to the video data, wherein the energy saving indication indicates the pre-processing filter.

13. The video encoding device of any one of claims 10 to 12, wherein the processor is further configured to pre-process the video data for energy savings, wherein the energy saving indication indicates that the video data was pre-processed for energy savings.

14. The video encoding device of any one of claims 10 to 13, wherein the processor is further configured to:

   determine to apply pre-processing filtering;
   apply pre-processing filtering to the video data; and
   include, in the metadata, an energy module indication configured to indicate a location in a video workflow in which energy savings is expected based on the pre-processing filtering.

15. The video encoding device any one of claims 10 to 14, wherein the metadata further indicates at least one of:

   whether previously received energy optimization information is canceled for the subsequent video data;
   whether energy optimization information in the metadata applies to the subsequent video data; or
   an optimization type applied to the subsequent video data.

FIG. 1

FIG. 2

EP 4 734 522 A1

18

**FIG. 3**

EP 4 734 522 A1

**FIG. 4**

500 Get a series of pre processing filters to be applied on a video to potentially optimize it for energy savings

501 Set eeoi_type and all related metadata according to the list of pre processings and their parameters

Insert eeoi_type and all related metadata in EEOI SEI message 502

Set eeoi_energy_saving_idc to a value depending on whether it is dedicated to some energy savings purpose or not 503

Insert eeoi_energy_saving_idc in EEOI SEI message 504

505 Insert EEOI SEI message in bitstream

Bitstream

# FIG. 5

FIG. 6

EP 4 734 522 A1

FIG. 7

Europäisches
Patentamt

European
Patent Office

Office européen
des brevets

# EUROPEAN SEARCH REPORT

**Application Number**

EP 24 30 6789

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | C-H DEMARTY (INTERDIGITAL) ET AL: "[AHG9]: Neural network post-filter for recovering images from energy-aware images", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0126 ; m67196 17 April 2024 (2024-04-17), XP030317431, Retrieved from the Internet: URL:https://jvet-experts.org/doc_end_user/ documents/34_Rennes/wg11/JVET-AH0126-v2.zi p JVET-AH0126.docx [retrieved on 2024-04-17] * abstract; figure 1 * * paragraphs [0001] - [0003] * ----- | 1-15 | INV. H04N19/85 H04N19/70 H04N19/117 |
| X | C-H DEMARTY (INTERDIGITAL) ET AL: "[AHG9]: Neural network post-filter for tone mapping operations", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0062 5 July 2024 (2024-07-05), XP030320170, Retrieved from the Internet: URL:https://jvet-experts.org/doc_end_user/ documents/35_Sapporo/wg11/JVET-AI0062-v2.z ip JVET-AI0062.docx [retrieved on 2024-07-05] * abstract; figures 1, 4 * * paragraphs [0001] - [0004] * ----- -/-- | 1,10 | TECHNICAL FIELDS SEARCHED (IPC) H04N |

The present search report has been drawn up for all claims

| Place of search | Date of completion of the search | Examiner |
|---|---|---|
| Munich | 5 February 2025 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**page 1 of 3**

Europäisches
Patentamt

European
Patent Office

Office européen
des brevets

# EUROPEAN SEARCH REPORT

**Application Number**

EP 24 30 6789

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MCCARTHY S ET AL: "Technologies under consideration for future extensions of VSEI (version 5)", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI2032 30 July 2024 (2024-07-30), XP030320779, Retrieved from the Internet: URL:https://jvet-experts.org/doc_end_user/documents/35_Sapporo/wg11/JVET-AI2032-v2.zip JVET-AI2032-v2.docx [retrieved on 2024-07-30] * paragraph [8.30] *<br>----- | 2,11 | |
| A | WO 2024/146589 A1 (DOUYIN VISION CO LTD [CN]; BYTEDANCE INC [US]) 11 July 2024 (2024-07-11) * the whole document *<br>----- | 1-15 | |
| A | CN 118 803 278 A (SHARP KK) 18 October 2024 (2024-10-18) * the whole document *<br>-----<br>-/-- | 1-15 | TECHNICAL FIELDS SEARCHED (IPC) |

The present search report has been drawn up for all claims

| Place of search | Date of completion of the search | Examiner |
|---|---|---|
| Munich | 5 February 2025 | Cakiroglu Garton, S |

EPO FORM 1503 03.82 (P04C01)

| | Europäisches Patentamt European Patent Office Office européen des brevets | **EUROPEAN SEARCH REPORT** | **Application Number** EP 24 30 6789 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HERGLOTZ (FAU) C ET AL: "AHG9: Green Metadata SEI message for VVC", 135. MPEG MEETING; 20210712 - 20210716; ONLINE; (MOTION PICTURE EXPERT GROUP OR ISO/IEC JTC1/SC29/WG11), , no. m57185 ; JVET-W0071 30 June 2021 (2021-06-30), XP030296755, Retrieved from the Internet: URL:https://dms.mpeg.expert/doc_end_user/d ocuments/135_Teleconference/wg11/m57185-JV ET-W0071-v1-JVET-W0071-v1.zip ISO_IEC_23001-11_2018(E)-FDIS2_Amend_VVC.d ocx [retrieved on 2021-06-30] * the whole document * ----- | 1-15 | |

| | | TECHNICAL FIELDS SEARCHED (IPC) |
|---|---|---|

The present search report has been drawn up for all claims

| Place of search | Date of completion of the search | Examiner |
|---|---|---|
| Munich | 5 February 2025 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6789

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2025

| Patent document cited in search report | Publication date | Patent family member(s) | Publication date |
|---|---|---|---|
| WO 2024146589 A1 | 11-07-2024 | WO 2024146589 A1<br>WO 2024146595 A1 | 11-07-2024<br>11-07-2024 |
| CN 118803278 A | 18-10-2024 | CN 118803278 A<br>EP 4447451 A1<br>US 2024348831 A1 | 18-10-2024<br>16-10-2024<br>17-10-2024 |

EPO FORM P0459

For more details about this annex : see Official Journal of the European Patent Office, No. 12/82